(19) Europäisches Patentamt
European Patent Office
Office européen des brevets

(11) **EP 1 282 847 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **01940498.7**

(22) Anmeldetag: **17.05.2001**

(51) Int Cl.:
**G06F 1/025** (2006.01)   **H03L 7/099** (2006.01)

(86) Internationale Anmeldenummer:
**PCT/EP2001/005675**

(87) Internationale Veröffentlichungsnummer:
**WO 2001/090863 (29.11.2001 Gazette 2001/48)**

(54) **DIGITALER TAKTGENERATOR**

DIGITAL CLOCK GENERATOR

HORLOGE NUMERIQUE

(84) Benannte Vertragsstaaten:
**DE FR GB IT NL**

(30) Priorität: **19.05.2000 DE 10024783**

(43) Veröffentlichungstag der Anmeldung:
**12.02.2003 Patentblatt 2003/07**

(73) Patentinhaber: **Micronas GmbH**
**79108 Freiburg i. Br. (DE)**

(72) Erfinder: **BEINTKEN, Hartmut**
**San Diego, CA 92109 (US)**

(74) Vertreter: **Bickel, Michael**
**Westphal & Partner**
**Mozartstrasse 8**
**80336 München (DE)**

(56) Entgegenhaltungen:
**WO-A-96/41419**          **US-A- 3 882 403**
**US-A- 5 247 469**

**Beschreibung**

Die Erfindung betrifft einen digitalen Taktgenerator für digitale Anwendungsschaltungen, die ein sehr genaues Taktsignal benötigen.

Taktgeneratoren sind Funktionseinheiten in digitalen elektronischen Systemen, in der die zur Steuerung notwendigen Taktimpulse erzeugt werden. Da zur Steuerung eines komplexen digitalen Systems eine Vielzahl verschiedener Taktsignale notwendig ist, werden aus einem hochfrequenten Systemtakt durch digitale Taktgeneratoren Ausgangstaktsignale für die verschiedenen Anwendungsschaltungen innerhalb des komplexen digitalen Systems erzeugt.

Analoge Taktgeneratoren werden zunehmend durch volldigitale Taktgeneratoren ersetzt. Herkömmliche digitale Taktgeneratoren sind schaltungstechnisch als rückgekoppelte Addierer aufgebaut und werden als DTO-Taktgeneratoren (DTO: Digital Timing Generator) bezeichnet. Diese herkömmlichen DTO-Taktgeneratoren werden im Bereich der Videosignalverarbeitung zur Pixelerzeugung im 100 Hz-Bereich eingesetzt, wobei diese DTO-Taktgeneratoren aus einem Systemtakteingangssignal mit einer Systemtaktfrequenz von über 600 MHz betrieben werden und so ein Ausgangstaktsignal erzeugen, das eine hohe Phasenabweichung bzw. Jitter aufweist. Eine maximale Phasenabweichung des Ausgangstaktsignals von bis zu 3 ns ist im Bereich der Videosignalverarbeitung in der Regel zulässig, jedoch gibt es einige Anwendungen, die eine noch geringere Phasenabweichung des Ausgangstaktsignals des Taktgenerators erfordern.

Beispielsweise benötigen digitale CVBS-Encoder (CVBS = Colour Video Blanking Signal) bei der Videosignalverarbeitung ein sehr genaues Taktsignal mit einer sehr geringen Phasenabweichung. Dabei muss die Phasenabweichung des Taktsignals unter 2 ns liegen, da sonst diese Phasenabweichung bei homogenen Farbflächen auf der Bildschirmoberfläche für das menschliche Auge bereits wahrnehmbar sind. Für digitale CVBS-Encoder sollte daher der digitale Taktgenerator ein Ausgangstaktsignal erzeugen, dessen Phasenabweichung unter 1 ns liegt. Durch Erhöhung der Systemtaktfrequenz des durch den digitalen Taktgenerator empfangenen Systemtaktsignals ist es nicht möglich eine derartig geringe Phasenabweichung des Ausgangstaktsignals zu erreichen, da hierfür Systemtaktfrequenzen von über einem GHz benötigt würden.

Aus der US 4,933,890 ist ein digitaler Taktgenerator bekannt, der ein phasenkompensiertes Taktsignal zur Verfügung stellt. Der digitale Taktgenerator weist einen Addierer auf, der mit jedem Takt eines Systemtaktsignals einen von außen zugeführten Inkrementwert aufaddiert, wobei das höchstwertige Bit dieses Addierers einem D-Flip-Flop zugeführt ist, an dessen Ausgang das Taktsignal anliegt. Das D-Flip-Flop wird zur Ausgabe eines phasenkompensierten Taktsignals abhängig von den niederwertigen Bits des Addieres, die durch eine Verzögerungsschaltung verarbeitet werden, getaktet.

Es ist die Aufgabe der vorliegenden Erfindung, einen digitalen Taktgenerator zu schaffen, der neben der Erzeugung eines Ausgangstaktsignals für eine Anwendungsschaltung diese Anwendungsschaltung über die in dem Ausgangstaktsignal enthaltene Phasenabweichung informiert.

Diese Aufgabe wird erfindungsgemäß durch einen digitalen Taktgenerator mit den im Patentanspruch 1 angegebenen Merkmalen gelöst.

Die Erfindung schafft einen digitalen Taktgenerator mit

einem System-Takteingang zum Anlegen eines hochfrequenten System-Taktsignals,
einem digitalen Dateneingang zum Anlegen eines einstellbaren digitalen Inkrementwertes,
einem Addierer zur Addition des Inkrementwertes mit dem rückgekoppelten digitalen Summenwert des Addieres,
einem Ausgaberegister zur Ausgabe des höchstwertigsten Datenbits des digitalen Summenwertes als Ausgangs- und Taktsignal des Taktgenerators über eine Ausgangstaktleitung und mit einer digitalen Phasenabweichungs-Berechnungseinheit zur Berechnung der Phasenabweichung des Ausgangstaktsignals in Abhängigkeit der übrigen niederwertigen Datenbits des digitalen Summenwertes und des digitalen Inkrementwertes, wobei die berechnete Phasenabweichung als digitaler Phasenabweichungswert an einen digitalen Datenausgang ausgegeben wird.

Bei einer bevorzugten Ausführungsform des erfindungsgemäßen digitalen Taktgenerators weist die digitale Phasenabweichungs-Berechnungseinheit eine mit dem digitalen Dateneingang verbundene Skalierungseinrichtung zur Skalierung des Phasenabweichungswertes in Abhängigkeit von dem Inkrementwert auf.

Der von der Skalierungseinrichtung abgegebene skalierte Inkrementwert wird vorzugsweise in einem Skalierungsregister der digitalen Phasenabweichung-Berechnungseinheit zwischengespeichert.

Die digitale Phasenabweichung-Berechnungseinheit weist vorzugsweise ein Register zum Zwischenspeichern der niederwertigen Datenbits des von dem Addierer erzeugten digitalen Summenwerts auf.

Die digitale Phasenabweichung-Berechnungseinheit weist vorzugsweise einen Mehrbit-Multiplizierer auf, der den zwischengespeicherten skalierten Inkrementwert mit den zwischengespeicherten niederwertigen Datenbits des Summenwertes zur Berechnung des digitalen Phasenabweichungswertes multipliziert.

Bei einer bevorzugten Ausführungsform ist dem Addierer ein Register zum Zwischenspeichern des Summenwertes nachgeschaltet.

Die Register werden vorzugsweise mit hochfrequenten Systemtaktsignal getaktet.

Bei einer besonders bevorzugten Ausführungsform weist hochfrequente Systemtaktsignal eine Frequenz von über 600 MHz auf.

Die Ausgangstaktleitung und der digitale Datenausgang des digitalen Taktgenerators sind vorzugsweise mit einer Datenverarbeitungseinheit verbunden, die einen in einem äquidistanten Zeitraster anliegenden Eingangsdatenstrom in einen Ausgangsdatenstrom umrechnet, der das nicht äquidistante Zeitraster des an der Ausgangstaktleitung anliegenden Ausgangstaktsignals aufweist.

Vorzugsweise ist ein Digital-Analog-Wandler zur Umwandlung des Ausgangsdatenstroms in ein analoges Ausgangssignal vorgesehen.

Dabei wird der Digital-Analog-Wandler vorzugsweise mit dem Ausgangstaktsignal getaktet.

Der erfindungsgemäße digitale Taktgenerator wird vorzugsweise zur Erzeugung eines Taktsignals für einen digitalen CVBS-Encoder verwendet.

Der erfindungsgemäße digitale Taktgenerator wird weiterhin vorzugsweise als Oszillator in einem digitalen Phasen-Regelkreis verwendet.

Im weiteren wird eine bevorzugte Ausführungsform des erfindungsgemäßen digitalen Taktgenerators unter Bezugnahme auf die beigefügten Figuren zur Erläuterung erfindungswesentlicher Merkmale beschrieben.

Es zeigen:

Fig. 1     ein Blockschaltbild des erfindungsgemäßen digitalen Taktgenerators;

Fig. 2     eine Anwendungsschaltung, die den in Figur 1 dargestellten erfindungsgemäßen digitalen Taktgenerator enthält;

Fig. 3     Signalablaufdiagramme zur Erläuterung der Funktionsweise der in Figur 2 dargestellten Anwendungsschaltung.

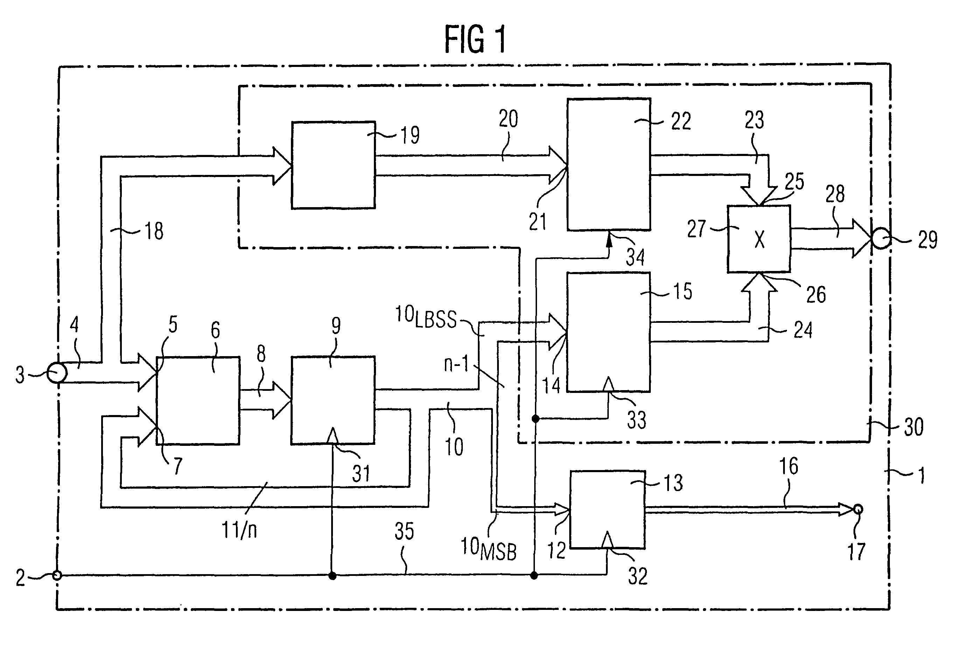

Wie man aus Figur 1 entnehmen kann, weist der erfindungsgemäße digitale Taktgenerator 1 einen System-Takteingang 2 zum Anlegen eines hochfrequenten System-Taktsignals und einen digitalen Dateneingang 3 zum Anlegen eines einstellbaren digitalen Inkrementwertes auf. Der an dem digitalen Dateneingang 3 anliegende Inkrementwert wird über interne Datenleitungen 4 an erste Dateneingänge 5 eines digitalen Addierers 6 angelegt. Der Addierer 6 weist weitere Dateneingänge 7 und Ausgangsleitungen 8 auf. Der Addierer 6 addiert den an dem Dateneingang 5 anliegenden digitalen Wert mit dem an dem Dateneingang 7 anliegenden digitalen Wert und gibt den gebildeten Summenwert über die Datenleitungen 8 an ein nachgeschaltetes Register 9 ab. In dem Register 9 wird der durch Addition gebildete Summenwert zwischengespeichert und über Ausgabe-Datenleitungen 10 ausgegeben. Die Ausgabe-Datenleitungen 8 des Summierers 6 sowie die Ausgabe-Datenleitungen 10 des Zwischenspeichers 9 weisen jeweils eine Datenbusbreite von n Bit auf, die die Bitbreite des digitalen Taktgenerators 1 darstellt. Die Ausgabe-Datenleitungen 10 des Zwischenspeichers 9 werden über Rückkoppelleitungen 11 an den zweiten Dateneingang 7 des Addieres 6 zurückgeführt. Der digitale Addierer 6 addiert den am digitalen Dateneingang 3 anliegenden Inkrementwert mit dem zwischengespeicherten über die Datenleitungen 10 und die Rückkoppelleitungen 11 zurückgeführten Summenwert. Die n-Datenleitungen 10 des Zwischenspeichers 9 werden aufgetrennt, wobei die Datenleitung $10_{MSB}$ für das höchstwertige Datenbit MSB mit dem Dateneingang 12 eines Ausgaberegisters 13 verbunden ist und die übrigen n-1 niederwertigen Daten-Bitleitungen $10_{LBSs}$ an einen Dateneingang 14 eines Registers 15 angelegt werden. Das Register 15 dient zum Zwischenspeichern der n-1 niederwertigen Datenbits des Summenwertes. Das Register 15 besteht dabei vorzugsweise aus mehreren FlipFlops. Das Ausgaberegister 13 speichert das über die Datenleitung $10_{MSB}$ zugeführte höchstwertige Datenbit des Summenwertes zwischen und gibt dieses getaktet durch das hochfrequente Systemtaktsignal über eine Ausgangstaktleitung 16 an einen Ausgangstaktanschluss 17 des digitalen Taktgenerators 1 ab.

Der an dem digitalen Dateneingang 3 anliegenden Inkrementwert wird über interne Datenleitungen 18 einer Skalierungseinrichtung 19 zugeführt. Die Skalierungseinrichtung 19 dient zur Skalierung des durch den digitalen Taktgenerator 1 ausgegebenen Phasenabweichungswertes in Abhängigkeit von dem Inkrementwert, welcher an dem digitalen Dateneingang 3 anliegt. Die Skalierungseinrichtung 19 ist ausgangsseitig über Datenleitungen 20 mit dem Dateneingang 21 eines weiteren Registers 22 zum Zwischenspeichern des Skalierungswertes verbunden.

Die Register 15, 22 sind über Ausgabe-Datenleitungen 23, 24 an die Eingänge 25, 26 eines Mehrbit-Multiplizierers 27 angeschlossen, der die in den Registern 15, 22 zwischengespeicherten digitalen Werte miteinander multipliziert und über Ausgabe-Datenleitungen 28 an einen digitalen Datenausgang 29 des digitalen Taktgenerators 1 ausgibt.

Die Skalierungseinrichtung 19, das Register 15 zum zwischenspeichern der n-1 niederwertigen Bits des Summenwertes, das Register 22 zum Zwischenspeichern des skalierten Inkrementwertes sowie der Mehrbit-Multiplizierer 27 bilden zusammen eine Phasenabweichungs-Berechungseinheit 30 zur Berechnung der Phasenabweichung des Ausgangstaktsignals des digitalen Taktgenerators 1, wobei das Ausgangstaktsignal über den digitalen Taktausgang 17 ausgegeben wird. Die Phasenabweichungs-Berechnungseinheit 30 berechnet die Phasenabweichung des Ausgangstaktsignals in Abhängigkeit von der n-1 niederwertigen Datenbits des durch den Addierer 6 gebildeten Summenwertes und dem an dem digitalen Dateneingang 3 anliegenden digitalen Inkrementwert. Der digitale Inkrementwert ist dabei extern einstellbar.

Die Register 9, 13, 15, 22 weisen System-Takteingänge 31, 32, 33, 34 auf, die an eine gemeinsame interne System-Taktleitung 35 des digitalen Taktgenerators 1 angeschlossen sind. Die interne System-Taktleitung 35 liegt an dem System-Takteingang 2 des digitalen Taktgenerators 1 an. Das hochfrequente SystemTaktsignal, das an dem System-Takteingang 2 angelegt ist, wird vorzugsweise durch einen Quarzgenerator und einen Frequenzmultiplizierer erzeugt und besitzt eine Systemtaktfrequenz von über 600 MHz.

Das Ausgangstaktsignal des Taktgenerators 1 weist einen Phasenabweichung auf, da aufgrund des Inkrementwertes auch ungerade Teilungsfaktoren zwischen der Systemtaktfrequenz und der Ausgangstaktfrequenz erzeugt werden können. In dem digitalen Taktgenerator 1 liegt über den internen Datenleitungen 10 jedoch ein n-Bit breiter digitaler Wert an, der genauere Informationen über die Phasenlage des Ausgangssignals enthält. Durch Auswertung des an den n-1 niederwertigen Bitleitungen 10 anliegenden digitalen Wertes, der Informationen über die Phasenlage des Ausgangstaktsignals enthält, ist es möglich zusätzlich zu jeder Taktflanke des Ausgangstaktsignals eine zugehörige Phasenabweichung zu berechnen. Diese Berechnung erfolgt durch Phasenabweichungs-Berechnungseinheit 30.

Da innerhalb eines Systemtaktes genau einmal der Inkrementwert in dem Addierer 6 aufaddiert wird, entspricht dieser Wert als Rest, d.h. als n-1 niederwertige Datenbits, genau einer Systemtaktperiode des digitalen Taktgenerators. Direkt nach einer ansteigenden Taktflanke des Ausgangstaktsignals kann maximal der um eins verringerte Inkrementwert in dem Register 15 stehen.

Für alle Fälle für die gilt:

$$\text{Inkrementwert} < 2^{n-1} \qquad\qquad (1)$$

wird daher die volle Bitbreite nur ausgenutzt, wenn die restlichen niederwertigen Datenbits des digitalen Summenwerts sofort skaliert werden. Hierzu wird der Inkrementwert zur maximalen Bitbreite n des digitalen Taktgenerators 1 gesetzt. Normalerweise sind die n-1 niederwertigen Datenbits, die in dem Register 15 zwischengespeichert werden, zum Zeitpunkt der aktiven Ausgangstaktflanke des Ausgangstaktsignals ein genaues Maß für die tatsächliche Phasenabweichung des Ausgangstaktes zu dem gewünschten idealen Taktsignal. Dieser Rest des digitalen Summenwertes hängt aber in seiner Größe zusätzlich von dem anliegenden Inkrementwert ab. Die tatsächliche Größe einer äquidistanten Subphase $T_{SUB}$ hängt von dem anliegenden digitalen Inkrementwert ab.

$$T_{SUB} = \frac{T_{clkAus}}{\text{Inkrementwert}} \qquad\qquad (2)$$

Der Inkrementwert kann sich dynamisch ändern und daher wird, um dem fixen zeitlichen Bezug wiederherzustellen, der Phasenabweichungswert abhängig von dem Inkrementwert durch die Skalierungseinrichtung 19 der Phasenabweichungs-Berechnungseinheit 30 umgerechnet bzw. skaliert.

Die Skalierung durch die Skalierungseinrichtung 19 gibt einen skalierten Inkrementwert gemäß folgender Gleichung ab :

$$\text{Inkrementwert}_{skaliert} = \frac{2^{n-1}}{\text{Inkrementwert}} \qquad\qquad (3)$$

Der skalierte Inkrementwert wird in dem Register 22 zwischengespeichert und mit den in dem Register 15 zwischengespeicherten n-1 niederwertigen Datenbits des Summenwertes multipliziert, so dass sich die berechnete Phasenabweichung ergibt zu:

$$Phasenabweichung_{AUS} = \text{Rest} \; \frac{2^{n-1}}{Inkrementwert} \qquad (4)$$

wobei Rest die niederwertigen Datenbits des Summenwerts bezeichnet.

Durch die Phasenabweichungs-Berechnungseinheit 30 wird ein Phasenabweichungswert ermittelt, der unabhängig von dem augenblicklichen Inkrementwert die Periode des Ausgangstaktsignals $T_{clkAUS}$ in eine feste Anzahl äquidistanter Subphasen $T_{SUB}$ zerlegt.

Der berechnete Phasenabweichungswert gibt die Phasenabweichung mit einer Datenauflösung gemäß folgender Gleichung an:

$$Auflösung = \frac{f_{Sytemtakt}}{2^{n-1}} \qquad (5)$$

wobei $f_{Systemtakt}$ die Systemtaktfrequenz des hochfrequenten Systemtaktsignals ist.

Der digitale Taktgenerator 1 gemäß der Erfindung gibt neben dem am Ausgangstaktsignal 17 abgegebenen Ausgangstaktsignal einen digitalen Phasenabweichungswert an dem digitalen Datenausgang 29 ab, der die Phasenabweichung von einem virtuellen idealen Taktausgangssignal, d.h. die aktuelle Jittergröße, angibt. Durch die Berechnung dieses digitalen Phasenabweichungswertes ist es möglich, in nachgeschalteten Datenverarbeitungseinheiten die dort berechneten digitalen Werte entsprechend den zugeführten Phasenabweichungswerten zu korrigieren bzw. zu interpolieren.

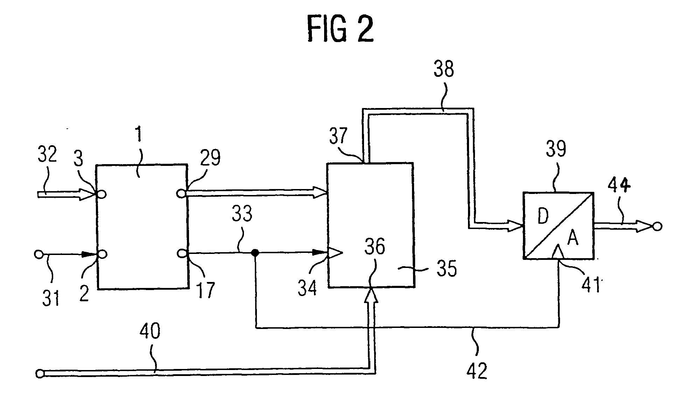

Figur 2 zeigt eine Anwendungsschaltung, die den erfindungsgemäßen digitalen Taktgenerator 1 enthält.

Der digitale Taktgenerator 1 erhält an seinem Systemtakteingang 2 über eine Leitung 31 ein hochfrequentes Systemtaktsignal, das beispielsweise in einem Quarzgenerator und einem Frequent-Multiplizierer erzeugt worden ist. An dem digitalen Dateneingang 3 wird über Datenleitungen 32 ein einstellbarer Inkrementwert angelegt. Der digitale Taktgenerator 1 erzeugt an seinem Taktausgangsanschluss 17 ein Ausgangstaktsignal, das über eine Taktleitung 33 zu einem Takteingang 34 einer Datenverarbeitungseinheit 35 gelangt. Die Datenverarbeitungseinheit 35 besitzt einen Dateneingang 36 zum Anlegen eines digitalen Eingangsdatenstroms und einen Datenausgang 37 zur Abgabe eines Ausgangsdatenstroms über Datenleitungen 38 an einen nachgeschalteten Digital-Analog-Wandler 39. Der Dateneingang 36 der Datenverarbeitungseinheit 35 erhält einen Eingangsdatenstrom über Datenleitungen 40, die durch die Datenverarbeitungseinheit 35 zu dem Ausgangsdatenstrom umgerechnet werden. Der Ausgangsdatenstrom wird in dem Digital-Analog-Wandler 39 zu einem analogen Ausgangssignal umgewandelt, das über eine Signalleitung 44 abgegeben wird. Der digitale Analog-Wandler 39 weist ebenfalls einen Takteingang 41 auf, der über eine Taktleitung 42 mit dem Taktsignalausgang 17 des digitalen Taktgenerators 1 verbunden ist.

Die Datenverarbeitungseinheit 35 rechnet die in einem äquidistanten Zeitraster anliegenden Eingangsdaten, die sie über die Leitungen 40 erhält, in einen Ausgangsdatenstrom um, der das nicht-äquidistante Zeitraster des an der Taktleitung 33 anliegenden Ausgangstaktsignals des digitalen Taktgenerators 1 aufweist.

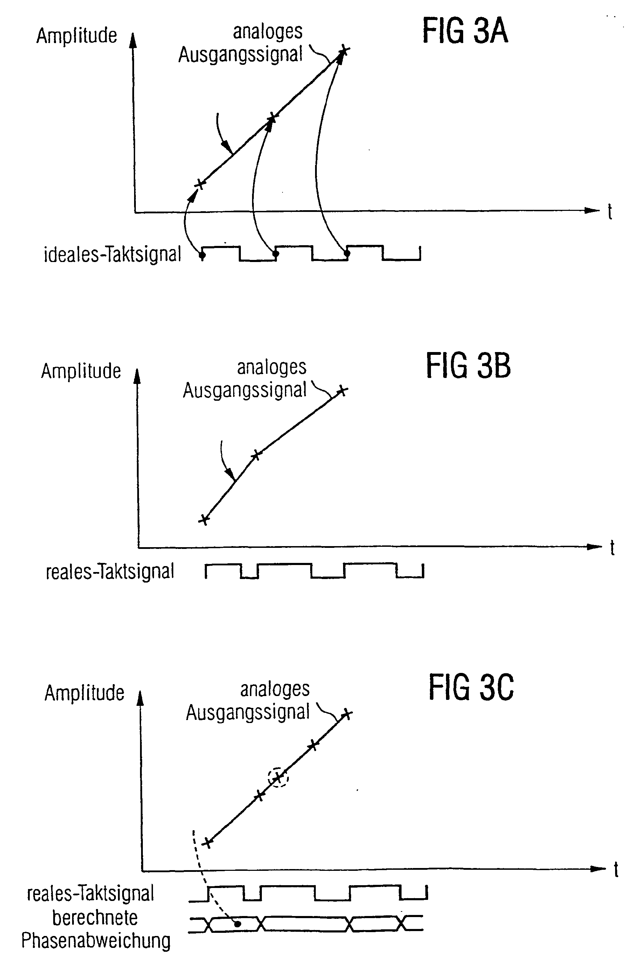

Figur 3a zeigt eine linear ansteigende Flanke eines analogen Ausgangssignals bei einem idealen Ausgangstaktsignal des Taktgenerators 1 an.

Figur 3b zeigt einen realen Fall, bei dem ein reales Taktausgangssignal aus dem digitalen Taktgenerator 1 abgegeben wird.

Dieses reale Taktausgangssignal ist mit einem Phasenjitter bzw. einer Phasenabweichung versehen, d.h. die ansteigenden Taktflanken des Taktausgangssignals sind nicht gleichmäßig beabstandet. Hierdurch erhält die ansteigende Signalflanke des analogen Ausgangssignals, welches durch den digitalen Analog-Wandler 39 abgegeben wird, einen Knick.

Figur 3c zeigt wie durch die Ausgabe der berechneten Phasenabweichung über den digitalen Datenausgang 29 des digitalen Taktgenerators 1 an die Datenverarbeitungseinheit 35 diese in die Lage versetzt wird, den Ausgangsdatenstrom in Abhängigkeit von dem Eingangsdatenstrom und der Phasenabweichung derart zu berechnen, dass dieser das nicht-äquidistante Zeitraster des realen Taktausgangssignals besitzt. Durch die korrigierten digitalen Ausgangswerte der Datenverarbeitungseinheit 35 wird die Linearität der ansteigenden analogen Signalflanke hergestellt. Indem der erfindungsgemäße digitale Taktgenerator 1 neben dem mit Phasenabweichung behafteten realen Taktsignal zusätzlich die zugehörige Phasenabweichung zur Verfügung stellt, können Datenverarbeitungseinheiten 35, die an dem erfindungsgemäßen digitalen Taktgenerator 1 angeschlossen sind, die Phasenabweichungen bei der Datenverarbeitung berücksichtigen.

Der erfindungsgemäße digitale Taktgenerator 1 eignet sich insbesondere für Anwendungen, die ein sehr genaues gleichmäßiges Taktsignal benötigen, wie beispielsweise digitale Encoder, insbesondere Encoder für die Videoverarbeitung, wie beispielsweise CVBS-Encoder. Ein weiteres mögliches Einsatzgebiet ist die Verwendung des erfindungsgemäßen digitalen Taktgenerators 1 als Oszillator innerhalb eines digitalen Phasenregelkreises, der neben dem digitalen Taktgenerator 1 ein digitales Schleifenfilter und eine Phasenvergleichsschaltung enthält.

Ein weiteres wesentliches Einsatzgebiet für den erfindungsgemäßen digitalen Taktgenerator sind digitale Decoder, insbesondere Decoder für die Videoverarbeitung, wie beispielsweise MPEG-Decodersysteme. Hierfür kann der erfindungsgemäße Taktgenerator mit einer Systemtaktfrequenz von 600 MHz eingesetzt werden. Der Phasenabweichungswert des digitalen Taktgenerators 1 wird zur Korrektur der Abtastwerte eines FBAS-Encoders eingesetzt.

Bezugszeichenliste:

| | |
|---|---|
| 1 | digitaler Taktgenerator |
| 2 | Systemtakteingang |
| 3 | digitaler Dateneingang |
| 4 | Datenleitung |
| 5 | Addierer-Eingang |
| 6 | Addierer |
| 7 | Addierer-Eingang |
| 8 | Datenleitungen |
| 9 | Register |
| 10 | Datenleitungen |
| 11 | Rückkoppelleitungen |
| 12 | Registerdateneingang |
| 13 | Ausgaberegister |
| 14 | Registerdateneingang |
| 15 | Register |
| 16 | Taktleitung |
| 17 | Taktleitungsausgang |
| 18 | Datenleitungen |
| 19 | Skalierungseinrichtung |
| 20 | Datenleitungen |
| 21 | Register-Dateneingang |
| 22 | Register |
| 23 | Datenleitungen |
| 24 | Datenleitungen |
| 25 | Multiplizierer-Dateneingang |
| 26 | Multiplizierer-Dateneingang |
| 27 | Multiplizierer |
| 28 | Datenleitungen |
| 29 | digitaler Datenausgang |
| 30 | Phasenabweichungs-Berechnungseinheit |
| 31 | Systemtaktleitung |
| 32 | Inkrementeingabeleitungen |
| 33 | Ausgangstaktleitungen |
| 34 | Takteingang |
| 35 | Datenverarbeitungseinheit |
| 36 | Dateneingang |
| 37 | Datenausgang |
| 38 | Datenleitungen |
| 39 | Digital-Analog-Wandler |
| 40 | Analog-Signalleitung |
| 41 | Takteingang |
| 42 | Taktleitung |
| 44 | Analog-Signalleitung |

**Patentansprüche**

1.  Digitaler Taktgenerator mit

    einem Systemtakteingang (2) zum Anlegen eines hochfrequenten Systemtaktsignals;
    einem digitalen Dateneingang (3) zum Anlegen eines einstellbaren digitalen Inkrementwertes;
    einem Addierer (6) zur Addition des Inkrementwertes mit dem rückgekoppelten digitalen Summenwert des Addierers;
    einem Ausgaberegisters (13) zur Ausgabe des höchstwertigen Datenbits des digitalen Summenwertes als Ausgangs-Taktsignal des Taktgenerators (1) über eine Ausgangstaktleitung (33) und mit
    einer digitalen Phasenabweichungs-Berechnungseinheit (30) zur Berechnung der Phasenabweichung des Ausgangs-Taktsignals in Abhängigkeit der niederwertigen Datenbits des digitalen Summenwertes und des digitalen Inkrementwertes, wobei die Phasenabweichung als digitaler Phasenabweichungswert an einen digitalen Datenausgang (29) ausgegeben wird.

2.  Digitaler Taktgenerator nach Anspruch 1,
    **dadurch gekennzeichnet, dass**

    die digitale Phasenabweichungs-Berechnungseinheit (30) eine mit dem digitalen Dateneingang (3) verbundene Skalierungseinrichtung (19) zur Skalierung des Phasenabweichungswertes in Abhängigkeit von dem Inkrementwert aufweist.

3.  Digitaler Taktgenerator nach Anspruch 1 oder 2,
    **dadurch gekennzeichnet, dass**

    ein von der Skalierungseinrichtung (19) abgegebener skalierter Inkrementwert in einem Skalierungsregister (22) der digitalen Phasenabweichungsberechnungseinheit (30) zwischengespeichert wird.

4.  Digitaler Taktgenerator nach einem der vorangehenden Ansprüche,
    **dadurch gekennzeichnet, dass**

    die digitale Phasenabweichungs-Berechnungseinheit (30) ein Register (15) zum Zwischenspeichern der niederwertigen Datenbits des von dem Addierer (6) erzeugten digitalen Summenwerts aufweist.

5.  Digitaler Taktgenerator nach einem der vorangehenden Ansprüche,
    **dadurch gekennzeichnet, dass**

    die digitale Phasenabweichungs-Berechnungseinheit (30) einen Mehrbit-Multiplizierer (27) aufweist, der den zwischengespeicherten skalierten Inkrementwert mit dem zwischengespeicherten niederwertigen Datenbits des Summenwerts zur Berechnung des digitalen Phasenabweichungswertes multipliziert.

6.  Digitaler Taktgenerator nach einem der vorangehenden Ansprüche,
    **dadurch gekennzeichnet, dass**

    dem Addierer (6) ein Register (9) zum Zwischenspeichern des Summenwertes nachgeschaltet ist.

7.  Digitaler Taktgenerator nach einem der vorangehenden Ansprüche,
    **dadurch gekennzeichnet, dass**

    die Register (9, 13, 15, 22) mit dem hochfrequenten Systemtaktsignal getaktet werden.

8.  Digitaler Taktgenerator nach einem der vorangehenden Ansprüche,
    **dadurch gekennzeichnet, dass**

    das hochfrequente Systemtaktsignal eine Frequenz von über 600 MHz aufweist.

9.  Digitaler Taktgenerator nach einem der vorangehenden Ansprüche,
    **dadurch gekennzeichnet, dass**

die Ausgangstaktleitung (33) und der digitale Datenausgang (29) mit einer Datenverarbeitungseinheit (35) verbunden sind, die einen in einem äquidistanten Zeitraster anliegenden Eingangsdatenstrom, der einem abgetasteten analogen Signal entspricht, in einen Ausgangsdatenstrom umrechnet, der das nicht-äquidistante Zeitraster des an der Ausgangstaktleitung (33) anliegenden Ausgangstaktsignals aufweist.

10. Digitaler Taktgenerator nach einem der vorangehenden Ansprüche,
    **dadurch gekennzeichnet, dass**

    ein Digital-Analog-Wandler (39) zur Umwandlung des Ausgangsdatenstroms in ein analoges Ausgangssignal vorgesehen ist.

11. Digitaler Taktgenerator nach einem der vorangehenden Ansprüche,
    **dadurch gekennzeichnet, dass**

    der Digital-Analog-Wandler (39) mit dem Ausgangstaktsignal getaktet wird.

12. Verwendung des digitalen Taktgenerators nach Anspruch 1 in einem digitalen Encoder oder Decoder, insbesondere in einem Encoder oder Decoder für die Videobearbeitung, beispielsweise einem CVBS-Encoder.

13. Verwendung des digitalen Taktgenerators nach Anspruch 1 als Oszillator in einem digitalen Phasenregelkreis.


**Claims**

1. Digital clock generator with

   a system clock input (2) for applying a high-frequency system clock signal;
   a digital data input (3) for applying a settable digital increment value;
   an adder (6) for adding the increment value to the feedback digital cumulative value of the adder;
   an output register (13) for outputting the highest-order data bit of the digital cumulative value as an output clock signal of the clock generator (1) via an output clock line (33), and with
   a digital phase deviation calculation unit (30) for calculating the phase deviation of the output clock signal depending on the low-order data bits of the digital cumulative value and of the digital increment value, wherein the phase deviation is output as a digital phase deviation value to a digital data output (29).

2. Digital clock generator according to claim 1, **characterised in that** the digital phase deviation calculation unit (30) has a scaling device (19) for scaling the phase deviation value depending on the increment value, this device being connected to the digital data input (3).

3. Digital clock generator according to claim 1 or 2, **characterised in that** a scaled increment value supplied by the scaling device (19) is temporarily stored in a scaling register (22) of the phase deviation calculation unit (30) .

4. Digital clock generator according to one of the preceding claims, **characterised in that** the digital phase deviation calculation unit (30) has a register (15) for interim storage of the low-order data bits of the digital cumulative value generated by the adder (6).

5. Digital clock generator according to one of the preceding claims, **characterised in that** the digital phase deviation calculation unit (30) has a multi-bit multiplier (27) which multiplies the temporarily stored scaled increment value by the temporarily stored low-order data bit of the cumulative value, in order to calculate the digital phase deviation value.

6. Digital clock generator according to one of the preceding claims, **characterised in that** downstream of the adder (6) a register (9) is connected, for interim storage of the cumulative value.

7. Digital clock generator according to one of the preceding claims, **characterised in that** the registers (9, 13, 15, 22) are clocked with the high-frequency system clock signal.

8. Digital clock generator according to one of the preceding claims, **characterised in that** the high-frequency system clock signal has a frequency greater than 600 MHz.

**9.** Digital clock generator according to one of the preceding claims, **characterised in that** the output clock line (33) and the digital data output (29) are connected to a data processing unit (35) which converts an input data stream, which is applied in an equidistant time pattern and which corresponds to a scanned analog signal, into an output data stream which has the non-equidistant time pattern of the output clock signal that is present at the output clock line (33).

**10.** Digital clock generator according to one of the preceding claims, **characterised in that** a digital/analog converter (39) is provided, for converting the output data stream into an analog output signal.

**11.** Digital clock generator according to one of the preceding claims, **characterised in that** the digital/analog converter (39) is clocked with the output clock signal.

**12.** Use of the digital clock generator according to claim 1 in a digital encoder or decoder, in particular in an encoder or decoder for video processing, for example a CVBS encoder.

**13.** Use of the digital clock generator according to claim 1 as an oscillator in a digital phase-locked loop.

**Revendications**

**1.** Horloge numérique comprenant :

- une entrée d'horloge de système (2) pour appliquer un signal d'horloge de système haute fréquence ;
- une entrée de données numérique (3) pour appliquer une valeur incrémentale numérique réglable ;
- un additionneur (6) pour additionner la valeur incrémentale avec la valeur totale numérique de rétroaction de l'additionneur ;
- un registre d'émission (13) pour émettre le bit de donnée ayant la plus grande valeur de la valeur totale numérique comme signal d'horloge de sortie de l'horloge (1) par une ligne d'horloge de sortie (33), et
- une unité de calcul de déphasage numérique (30) pour calculer le déphasage du signal d'horloge de sortie en fonction du bit de donnée ayant la plus petite valeur de la valeur totale numérique et de la valeur incrémentale numérique, le déphasage étant émis comme valeur de déphasage numérique à une sortie de données numérique (29).

**2.** Horloge numérique selon la revendication 1,
**caractérisée en ce que**

l'unité de calcul de déphasage numérique (30) présente un dispositif de cadrage (19) relié à l'entrée de données numérique (3) pour cadrer la valeur de déphasage en fonction de la valeur incrémentale.

**3.** Horloge numérique selon la revendication 1 ou 2,
**caractérisée en ce qu'**

une valeur incrémentale cadrée émise par le dispositif de cadrage (19) est entreposée dans un registre de cadrage (22) de l'unité de calcul de déphasage numérique (30).

**4.** Horloge numérique selon l'une quelconque des revendications précédentes,
**caractérisée en ce que**

l'unité de calcul de déphasage numérique (30) présente un registre (15) pour entreposer les bits de données ayant la plus petite valeur de la valeur totale numérique générée par l'additionneur (6).

**5.** Horloge numérique selon l'une quelconque des revendications précédentes,
**caractérisée en ce que**

l'unité de calcul de déphasage numérique (30) présente un multiplicateur à bits multiples (27) qui multiplie la valeur incrémentale cadrée entreposée avec les bits de données ayant la plus petite valeur entreposés de la valeur totale pour calculer la valeur de déphasage numérique.

**6.** Horloge numérique selon l'une quelconque des revendications précédentes, **caractérisée en ce qu'**

un registre (9) est placé en aval de l'additionneur (6) pour entreposer la valeur totale.

**7.** Horloge numérique selon l'une quelconque des revendications précédentes, **caractérisée en ce que**

les registres (9, 13, 15, 22) sont synchronisés avec le signal d'horloge haute fréquence.

**8.** Horloge numérique selon l'une quelconque des revendications précédentes, **caractérisée en ce que**

le signal d'horloge haute fréquence présente une fréquence supérieure à 600 MHz.

**9.** Horloge numérique selon l'une quelconque des revendications précédentes, **caractérisée en ce que**

la ligne d'horloge de sortie (33) et la sortie de données numérique (29) sont reliées à une unité de traitement de données (35) qui convertit un courant de données d'entrée présent dans un systèmes à tranches de temps équidistant, qui correspond à un signal analogique balayé, en un courant de données de sortie qui présente le système à tranches de temps non équidistant du signal d'horloge de sortie appliqué sur la ligne d'horloge de sortie (33).

**10.** Horloge numérique selon l'une quelconque des revendications précédentes, **caractérisée en ce qu'**

un convertisseur numérique/analogique (39) est prévu pour convertir le courant de données de sortie en un signal de sortie analogique.

**11.** Horloge numérique selon l'une quelconque des revendications précédentes, **caractérisée en ce que**

le convertisseur numérique/analogique (39) est synchronisé avec le signal d'horloge de sortie.

**12.** Utilisation de l'horloge numérique selon la revendication 1, dans un codeur ou un décodeur, en particulier dans un codeur ou décodeur pour le traitement vidéo, par exemple dans un codeur CVBS.

**13.** Utilisation de l'horloge numérique selon la revendication 1, comme oscillateur dans un circuit de régulation de phase numérique.

# FIG 1

EP 1 282 847 B1

EP 1 282 847 B1

# FIG 2

FIG 3A

Amplitude

analoges
Ausgangssignal

t

ideales-Taktsignal

FIG 3B

Amplitude

analoges
Ausgangssignal

t

reales-Taktsignal

FIG 3C

Amplitude

analoges
Ausgangssignal

t

reales-Taktsignal
berechnete
Phasenabweichung